(19) Europäisches Patentamt
European Patent Office
Office européen des brevets

(11) **EP 3 155 608 B1**

(12) **FASCICULE DE BREVET EUROPEEN**

(45) Date de publication et mention de la délivrance du brevet:
**06.06.2018 Bulletin 2018/23**

(21) Numéro de dépôt: **15732555.6**

(22) Date de dépôt: **08.06.2015**

(51) Int Cl.:
*G10H 1/00* (2006.01)          *G10H 1/36* (2006.01)
*G10G 1/00* (2006.01)          *G10H 1/38* (2006.01)

(86) Numéro de dépôt international:
**PCT/EP2015/062735**

(87) Numéro de publication internationale:
**WO 2015/189157 (17.12.2015 Gazette 2015/50)**

(54) **PROCEDÉ DE SUIVI D'UNE PARTITION MUSICALE ET MODÉLISATION ASSOCIÉE**

VERFAHREN ZUM VERFOLGEN EINER MUSIKPARTITUR UND DAZUGEHÖRIGER MODELLIERUNG

METHOD OF FOLLOWING A MUSIC SCORE AND ASSOCIATED MODELIZATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2014 FR 1455248**

(43) Date de publication de la demande:
**19.04.2017 Bulletin 2017/16**

(73) Titulaire: **Makemusic**
**75002 Paris (FR)**

(72) Inventeurs:
• **COLAFRANCESCO, Julien**
  **F-93100 Montreuil (FR)**
• **DELL'ERA, Grégory**
  **F-78300 Poissy (FR)**

(74) Mandataire: **Ipside**
**7-9 Allées Haussmann**
**33300 Bordeaux Cedex (FR)**

(56) Documents cités:
JP-A- 2007 241 181    JP-A- 2007 241 181
US-A- 6 084 168        US-A- 6 084 168
US-A1- 2011 036 231   US-A1- 2011 036 231

• Frank Kurth ET AL: "SyncPlayer - An Advanced System for Multimodal Music Access", , 1 janvier 2005 (2005-01-01), XP055186797, Extrait de l'Internet: URL:http://audiolabs-erlangen.com/content/05-fau/professor/00-mueller/03-publications/2005_KurthMuDaFrRiCl_SyncPlayer_ISMIR.pdf [extrait le 2015-04-29]
• FERRÉOL SOULEZ ET AL: "Improving polyphonic and poly-instrumental music to score alignment", INTERNATIONAL CONFERENCE ON MUSIC INFORMATION RETRIEVAL (ISMIR 2003),, 1 janvier 2003 (2003-01-01), pages 2-7, XP055186967, baltimore, usa
• YUSHI UEDA ET AL: "HMM-based approach for automatic chord detection using refined acoustic features", ACOUSTICS SPEECH AND SIGNAL PROCESSING (ICASSP), 2010 IEEE INTERNATIONAL CONFERENCE ON, IEEE, PISCATAWAY, NJ, USA, 14 mars 2010 (2010-03-14), pages 5518-5521, XP031697185, ISBN: 978-1-4244-4295-9
• Frank Kurth ET AL: "SyncPlayer - An Advanced System for Multimodal Music Access", , 1 January 2005 (2005-01-01), XP055186797, Retrieved from the Internet: URL:http://audiolabs-erlangen.com/content/05-fau/professor/00-mueller/03-publications/2005_KurthMuDaFrRiCl_SyncPlayer_ISMIR.pdf [retrieved on 2015-04-29]

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **Ferréol Soulez ET AL: "Improving polyphonic and poly-instrumental music to score alignment", International Conference on Music Information Retrieval (ISMIR 2003),, 1 January 2003 (2003-01-01), pages 1-6, XP055186967, baltimore, usa**
- **YUSHI UEDA ET AL: "HMM-based approach for automatic chord detection using refined acoustic features", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 5518-5521, XP031697185, ISBN: 978-1-4244-4295-9**

**Description**

**Domaine de l'invention**

La présente invention concerne un procédé de suivi d'une partition musicale ainsi que le procédé de modélisation associé. L'invention se rapporte au domaine de la lecture de partitions musicales numériques.

L'invention trouve une application particulièrement avantageuse pour l'apprentissage, la pratique d'un instrument de musique, ou l'écoute dirigée d'une interprétation.

**Etat de la technique**

Il existe des logiciels de suivi d'une partition musicale numérique pour laquelle la zone active (note, mesure, portée,...) est déduite des tempi de ladite partition musicale, ou d'un tempo a priori fourni manuellement par l'interprète. Ces logiciels comportent classiquement un élément de marquage de ladite partition musicale, par exemple un surlignage ou un indicateur ponctuel. Après une temporisation indiquant le départ de la lecture, l'élément de marquage est déplacé à une vitesse correspondant au tempo de ladite partition musicale. Le musicien peut donc jouer la partition musicale au rythme du tempo de la partition en visualisant la zone active (note, mesure, portée,...) sur laquelle il devrait théoriquement se situer compte tenu du tempo de la partition.

Ces logiciels, dont la temporalité de lecture est définie a priori, ne prennent pas en compte le tempo réel du musicien lorsqu'il joue. Ce dernier doit « suivre le curseur de la partition » mais ne peut pas définir avec son propre jeu la position du curseur sur la partition. Ainsi, le musicien ne peut pas réduire la vitesse de défilement d'une partie de la partition qu'il a du mal à interpréter. De même, le musicien ne peut pas reprendre une partie de la partition qu'il veut perfectionner tout en étant suivi par les logiciels existants.

**Exposé de l'invention**

La présente invention vise à remédier aux inconvénients de l'art antérieur en proposant un procédé de suivi d'une partition musicale à l'écoute des performances fournies par un interprète et adapté à faire varier la vitesse ou la position de défilement en fonction de l'interprétation de l'interprète.

A cet effet, selon un premier aspect, l'invention concerne un procédé de suivi d'une partition musicale comportant les étapes suivantes : affichage d'un élément de marquage sur ladite partition musicale, et déplacement dudit élément de marquage, le procédé comportant également les étapes suivantes effectuées en temps réel : enregistrement d'au moins un son émis par un interprète sous la forme d'une trame de données d'une durée, estimation d'au moins un vecteur chromatique à partir d'un contenu de ladite trame de données, comparaison dudit vecteur chromatique avec des vecteurs chromatiques théoriques de ladite partition musicale, comparaison d'une transition entre ledit vecteur chromatique et un précédent vecteur chromatique avec des transitions théoriques de ladite partition musicale, et estimation d'une position de travail de l'interprète en fonction d'une position de travail précédente, de la comparaison dudit vecteur chromatique et de la comparaison de ladite transition, les étapes d'affichage et de déplacement dudit élément de marquage étant réalisées en fonction de ladite position de travail de l'interprète, et l'étape d'enregistrement étant réalisée sur une durée adaptée en fonction du rapport entre une durée de ladite transition et une durée de référence.

L'invention permet ainsi de reconnaître les notes ou accords fournies par l'interprète et d'associer cette reconnaissance avec les accords de ladite partition. Cette association permet au procédé de suivi de s'adapter en temps réel à l'interprétation.

Par exemple, les durées relatives aux notes ou accords sont prévues en fonction du tempo d'origine de ladite partition musicale mais l'interprète ne s'y plie pas forcément. Ce dernier peut avoir envie d'accélérer ou de ralentir, certaines parties. L'invention permet de renforcer le suivi du tempo propre à l'interprète. La modélisation du tempo permet aussi d'obtenir une estimation du tempo courant de l'interprète, cela peut s'avérer très utile pour des applications de synchronisation avancées.

Selon un autre exemple, il existe une hypothèse forte selon laquelle l'interprète joue toutes les notes ou accords, dans l'ordre, du premier au dernier. En pratique l'interprète a rarement cette discipline, au contraire, il peut vouloir s'entrainer et effectuer les allers retours au sein de la pièce qu'il travaille, s'arrêter puis reprendre à un autre endroit. Afin de répondre à cette attente, le procédé de l'invention peut effectuer des « sauts » au sein de la partition, en brisant la continuité de la partition. Ainsi les discontinuités de jeu sont autorisées au sein du modèle et lorsque qu'une telle discontinuité se présente, l'algorithme ne met qu'un temps restreint pour converger vers la nouvelle position.

Le procédé mis en oeuvre s'applique à une partition au sens global comprenant une formalisation d'accords ayant une temporalité, pas uniquement graphique. Par exemple, le procédé pourrait indiquer une position dans une partition matérialisée sous forme de fichier MIDI (pour « Musical Instrument Digital Interface » dans la littérature anglosaxonne).

L'invention s'applique également à une écoute dirigée d'une interprétation. Par exemple, un auditoire peut écouter une piste audio correspondant à une interprétation d'une partition via un système audio disposant de haut-parleurs et visualiser la zone active en cours de jeu sur la partition associé à la piste audio.

Selon un mode de réalisation, le procédé comporte une étape de normalisation dudit vecteur chromatique avec lesdits vecteurs chromatiques théoriques de ladite partition musicale. Cette étape de normalisation permet d'adapter les vecteurs chromatiques théoriques avec le vecteur chromatique estimé et ainsi améliore les performances de reconnaissance et d'association des accords joués par l'interprète.

Selon un mode de réalisation, l'étape de comparaison dudit vecteur chromatique avec des vecteurs chromatiques théoriques de ladite partition musicale comporte les sous-étapes suivantes : estimation de la distance euclidienne entre ledit vecteur chromatique et chaque vecteur chromatique théorique, normalisation de la somme des distances euclidiennes obtenues, et estimation d'une probabilité d'appartenance dudit vecteur chromatique à chaque vecteur chromatique théorique. Ce mode de réalisation offre un bon compromis entre les performances de comparaison et les ressources de calculs nécessaires aptes à permettre une traitement en temps réel.

Selon un mode de réalisation, l'étape de comparaison d'une transition entre ledit vecteur chromatique et un précédent vecteur chromatique est effectuée au moyen d'une loi de Poisson. Ce mode de réalisation offre également un bon compromis entre les performances de comparaison et les ressources de calculs nécessaires aptes à permettre un traitement en temps réel.

Selon un mode de réalisation, au moins une estimation est effectuée sur une échelle logarithmique. La présente invention implique de nombreuses multiplications, mettant souvent en jeu des valeurs proches de 0. Il est ainsi possible que les calculs deviennent instables à cause d'un dépassement de la précision relative aux nombres flottants sur l'architecture considérée. Afin de remédier à cela, ce mode de réalisation permet d'effectuer tous les calculs dans le domaine des « log-probabilités », ainsi toutes les multiplications deviennent des additions et la précision des calculs reste acceptable.

Selon un mode de réalisation, l'estimation de la durée de l'étape d'enregistrement est effectuée au moyen d'un algorithme de décodage de Viterbi. Ce mode de réalisation offre également un bon compromis entre les performances et les ressources de calculs nécessaires aptes à permettre un traitement en temps réel.

Selon un mode de réalisation, au moins une estimation comporte un seuil en dessous duquel l'estimation est jugée non pertinente et dont le résultat ne sera pas exploité. De par sa nature probabiliste, le procédé de suivi de partition selon l'invention peut se méprendre et donner une mauvaise indication à l'interprète. Cela peut arriver lorsqu'un interprète glisse quelques erreurs dans sa performance ou encore lors d'une interprétation trop libre de la partition. Afin de gérer au mieux les cas où l'information proposée par le procédé de l'invention n'est pas fiable, ce mode de réalisation permet de mettre en place un critère d'évaluation jugeant la pertinence de l'estimation.

Selon un deuxième aspect, l'invention concerne un procédé de modélisation d'une partition musicale comportant les étapes suivantes : découpage de la partition musicale en au moins une suite d'accords théoriques disposant d'un contenu et d'une durée, représentation du contenu de chaque accord théorique sous la forme d'un vecteur chromatique théorique, et modélisation des transitions théoriques entre les différents accords théoriques. Ce deuxième aspect de l'invention permet d'obtenir une représentation de la partition numérique. Le vecteur chromatique est une représentation plus « structurée » de la partition numérique qui rend les comparaisons entre accords plus simples.

Selon un mode de réalisation, l'étape de modélisation des transitions théoriques entre les différents accords théoriques est effectuée au moyen d'un modèle de Markov caché. Ce mode de réalisation offre également un bon compromis entre les performances de comparaison et les ressources de calculs nécessaires aptes à permettre une traitement en temps réel.

Selon un mode de réalisation, ledit vecteur chromatique théorique est constitué d'au moins une gamme de 12 scalaires de valeur 0 ou 1, chaque scalaire étant associé à l'un des demi-tons de la gamme chromatique : do, do#, ré, ré#, mi, fa, fa#, sol, sol#, la, la#, si. En variante, le vecteur chromatique comprend plus de nombres scalaires, par exemple afin d'intégrer les quart de tons de la musique arabe.

## Brève description des dessins

On comprendra mieux l'invention à l'aide de la description, faite ci-après à titre purement explicatif, des modes de réalisation de l'invention, en référence aux Figures dans lesquelles :

- la Figure 1 illustre les étapes d'un procédé de modélisation d'une partition musicale selon un mode de réalisation de l'invention ;
- la Figure 2 illustre les étapes d'un procédé de suivi d'une partition musicale selon un mode de réalisation de l'invention ; et
- la Figure 3 illustre une interface de suivi d'une partition musicale selon un mode de réalisation de l'invention.

**Description détaillée des modes de réalisation de l'invention**

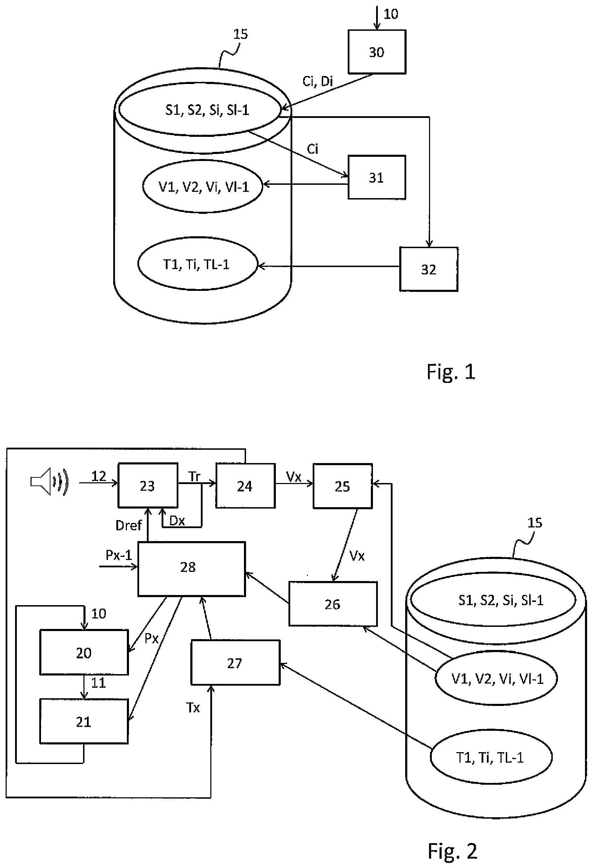

La Figure 1 illustre les étapes d'un procédé de modélisation d'une partition musicale 10 dans lequel la partition musicale 10 est découpée, dans une étape 30, en une suite d'accords théoriques S = {S0, S1,..., Si, Sl-1}. Chaque accord théorique de S est associé à un contenu Ci, un ensemble possiblement nul de hauteurs, et à une durée Di possédant un début et une fin. Le début et la fin de l'accord sont respectivement les valeurs temporelles minimales et maximales avant que le contenu Ci de l'accord ne change.

Le contenu Ci de chaque accord théorique Si est représenté, dans une étape 31, sous la forme d'un vecteur chromatique Vi De préférence, un vecteur chromatique Vi est constitué d'une gamme de douze scalaires dont la valeur est comprise entre 0 et 1, chaque scalaire étant associé à l'un des demi-tons de la gamme chromatique : do, do#, ré, ré#, mi, fa, fa#, sol, sol#, la, la#, si. De préférence, la norme de chaque vecteur chromatique Vi est égale à 1. Les différences d'octaves se dissolvent à l'intérieur de cette représentation en vecteur chromatique Vi, la hauteur absolue de l'accord n'est donc plus prise en compte. Le vecteur chromatique Vi permet d'obtenir une version compacte du contenu Ci harmonique d'un accord théorique Si. Le vecteur chromatique Vi est aussi une représentation plus « structurée » qui rend les comparaisons entre accords théoriques de S plus simples permettant également de faire un usage intensif de la distance euclidienne.

Les transitions théoriques T0, Ti, Tl-1 entre les accords théoriques de S de la partition numérique 10 sont également modélisées de préférence au moyen d'un modèle de Markov caché à durée explicite. Pour ce faire, chaque accord théorique Si est considéré comme un état markovien et chaque état Si est associé à une ligne temporelle discrète dont l'expression est la suivante :

$$L_i = [L_{i,0}\ L_{i,1}\ ...\ L_{i,j}\ ...\ L_{i,J-1}]\,,$$

avec J, la taille d'un vecteur chromatique L et P, la période d'échantillonnage des lignes temporelles et Li,j , la probabilité que l'interpète soit sur l'état Si depuis jP millisecondes. Une fois que cette ligne temporelle a été constituée, les modalités selon lesquelles l'interprète passe d'un accord à un autre peuvent être modélisées.

Une base de données 15 est ainsi renseignée avec, pour chaque accord théorique de S le vecteur chromatique Vi et la transition théorique T0, Ti, Tl-1 entre le présent accord théorique et les accords de S.

La Figure 2 illustre les étapes d'un procédé de suivi d'une partition musicale 10 et d'analyse de la performance de l'interprète en temps réel, c'est-à-dire dans un temps déterminé.

Dans une première étape 23, un son 12 émis par l'intepète est enregistré sous la forme d'une trame de données Tr d'une durée Dx, par exemple 200 ms. A partir du contenu Cx de cette trame de données Tr, l'étape 24 consiste à estimer un vecteur chromatique Vx. Par exemple, cette estimation peut être réalisée par un réseau de neurone apte à reconnaitre tous les accords possibles joués par un interprète. Une normalisation du vecteur chromatique Vx est ensuite effectuée, dans une étape 25, pour correspondre au format des vecteurs chromatiques V0,V1 ,..Vi,...Vl-1 stockés sur la base de données 15.

Une étape 26 consiste ensuite à comparer le vecteur chromatique Vx avec les vecteurs chromatiques V0,V1,...Vi,...Vl-1 de la partition musicale 10. A cet effet, la distance euclidienne Ei est calculée entre le vecteur chromatique Vx et chaque vecteur chromatique Vi. Ces valeurs sont sauvegardées puis normalisées afin que la somme des distances euclidiennes Ei soit égale à 1. Les distances euclidiennes Ei représentent alors la « non-appartenance » de la trame actuelle Tr aux différents accords théoriques de S. Une dernière étape consiste à transformer ces probabilités de « non-appartenance » en probabilité « d'appartenance » c'est-à-dire en effectuant l'opération suivante :

$$E_i := 1 - E_i.$$

Une autre étape 27 consiste à analyser les transitions Tx entre le vecteur chromatique Vx et le vecteur chromatique Vx-1 précédemment joué par l'interprète. Pour ce faire, le modèle de Markov caché à durée explicite est utilisé en fonction des transitions théoriques T0,..., Ti, Tl-1 stockées sur la base de données 15. Le calcul des transitions est effectué en fonction de l'équation suivante :

$$L_{i,0} := max_j(Poisson(j,\lambda_i)L_{i-1,j}),$$

dans laquelle le terme À représente l'espérance associée à chaque élément j de la ligne temporelle discrète. Le terme Poisson fait référence à une loi de probabilité discrète qui décrit le comportement du nombre d'accord théorique de S se produisant dans la partition musicale 10.

La probabilité d'émission de la ligne temporelle discrète est ensuite calculée pour toutes les valeurs de i et j suivant l'équation :

$$L_{i,j} := L_{i,j}E_i.$$

Ces valeurs sont sauvegardées puis normalisées afin que la somme des lignes temporelles discrètes Li,j soit égale à 1. Les arguments maximaux pour i et j indiquent respectivement l'accord le plus probablement joué par l'interprète et l'avancement de l'interprète au sein de l'accord.

Les calculs précédents impliquent de nombreuses multiplications, mettant souvent en jeu des valeurs proches de 0. Il est ainsi possible que les calculs deviennent instables à cause d'un dépassement de la précision relative aux nombres flottants sur l'architecture considérée. Afin de remédier à cela tous les calculs peuvent être effectués dans le domaine des « logprobabilités», ainsi toutes les multiplications deviennent des additions et la précision des calculs reste acceptable. Les formules énoncées précédemment s'en retrouvent modifiées. Le calcul des transitions s'effectue désormais selon l'équation suivante :

$$L_{i,0} := max_j\big(\log\big(Poisson(j, \lambda_i)\big) + L_{i-1,j}\big),$$

et la prise en compte des probabilités d'émission s'effectue selon l'équation suivante :

$$L_{i,j} = L_{i,j} + \log(E_i).$$

La normalisation est remplacée par une mise à niveau des lignes temporelles discrètes selon l'équation :

$$L_{i,j} = L_{i,j} - max_{n,m}(L_{n,m}).$$

Les log-probabilités sont ainsi compensées afin que leur valeur maximale soit égale à 0.

Toutes ces informations permettent d'estimer, dans une étape 28, une position de travail Px de l'interprète en fonction d'une position de travail précédente Px-1, de la comparaison du vecteur chromatique Vx et de la comparaison de la transition Tx. Cette position de travail Px permet d'afficher, dans une étape 20, et de déplacer, dans une étape 21, un élément de marquage 11 sur la partition numérique 10.

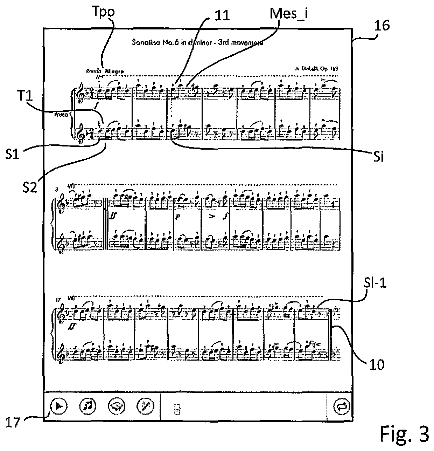

La Figure 3 représente une interface 16 de suivi d'une partition musicale 10 comportant un élément de marquage 11. L'élément de marquage 11 se présente sous la forme d'une ligne discrète représentant l'accord théorique S1, S2, Si, SI-1. De préférence, la mesure Mes_i dans laquelle se situe l'accord théorique S1, S2, Si, SI-1 est également affichée en surbrillance. L'interface 16 de suivi de la partition musicale 10 comporte également une contrôle de commande 17 accessible pour l'interprète afin d'effectuer des réglages sur le procédé de l'invention par exemple pour choisir la voix qui est interprétée par l'interprète et la ou les voix qui sont jouées par l'interface.

Dans ce mode de réalisation, lorsque l'interprète arrive en bas de page, le changement de page est automatique, sans que l'interprète n'ait besoin d'utiliser son doigt. En variante, la partition musicale 10 pourrait défiler sur l'écran en fonction de la position de travail Px, par exemple en raison de la taille des écrans des tablettes numériques.

En outre, les durées Di relatives aux accords théoriques S1, S2, Si, SI-1 sont estimées en fonction du tempo Tpo d'origine de la partition musicale 10 et l'interprète ne s'y plie pas forcement. Ce dernier peut avoir envie d'interpréter, d'accélérer ou de ralentir, certaines parties. L'invention met en oeuvre un suivi renforcé ne comportant aucune attente inappropriée concernant la vitesse d'interprétation de l'interprète. La modélisation du tempo V permet d'obtenir une estimation du tempo courant de l'interprète Tpo_inter. Cette estimation peut s'avérer très utile pour des applications de synchronisation avancées. Le tempo Di peut varier de manière importante au sein d'une partition musicale 10, pour cette raison le tempo précis de l'interprète Tpo_inter n'est pas considéré et le tempo V est estimé en fonction de l'équation suivante :

$$V = \frac{\text{Tpo\_inter}}{\text{Tpo}}.$$

Cette estimation du tempo V donne une vitesse de jeu relative de l'interprète par rapport à la partition musicale 10. Afin de donner une estimation de cette vitesse, il est possible d'utiliser un des algorithmes applicables aux chaines de Markov, le décodage de Viterbi. Il s'agit d'une technique de programmation dynamique permettant de tracer la succession d'états la plus probable ayant mené à un état cible. Dans le cas d'une chaine de Markov à durée explicite, la cible n'est pas exactement un état, mais un offset temporel jP au sein d'un état Si de probabilité Li,j. Concrètement, chaque cible dispose d'un vecteur Mi,j de taille K mémorisant son historique. Le vecteur Mi,j se met à jour durant l'étape de transition suivant l'équation :

$$M_{i,j} = \begin{cases} M_{i,j-1}, si\ j > 0 \\ shift(M_{i-1,j_{max}^{i-1}}, sinon \end{cases}$$

avec $j_{max}^{i} = \arg max_j L_i$ et *shift*($M_{i,j}$) l'opération assignant

$$m_{i,j,k} = \begin{cases} m_{i,j,k-1}, si\ k > 0 \\ j, si\ k = 0 \end{cases},$$

pour tout k.

Le vecteur $M_{i,j}$ résume le temps passé sur les K derniers états permettant ainsi d'obtenir l'estimation du tempo pour une cible donnée selon l'équation :

$$\tilde{V}_{i,j} = \frac{\sum_{k=1}^{K} D_{i-k}}{\sum_{k=1}^{K} m_{i,j,k}}.$$

Le tempo final est obtenu en évaluant $\tilde{V}_{i,j}$ à partir de la cible la plus probable, indexée par (*i,j*) = arg max$_{i,j}$L$_{i,j}$. Une fois l'estimation de tempo calculée, les durées Di associées aux accords théoriques Si sont modifiées. Cette altération des durées Di permet de traiter de manière plus adaptée la prochaine trame audio Tr jouée par l'interprète.

De par sa nature probabiliste, le procédé de suivi de la partition musicale 10 peut se méprendre et donner une mauvaise indication à l'interprète. Cela peut arriver lorsque l'interprète glisse quelques erreurs dans sa performance ou encore lors d'une interprétation trop libre de la partition musicale 10. Afin de gérer au mieux les cas ou l'information proposée par le procédé n'est pas fiable (par exemple en avertissant l'interprète), il peut être intéressant de mettre en place un critère d'évaluation jugeant la pertinence des estimateurs par exemple en utilisant l'étape de « remise à niveaux » détaillée précédemment. Lors de cette procédure, le terme maxn,m(Ln,m) peut être interprété comme une pénalité globale, induite par la dernière trame Tr considérée. En moyennant maxn,m(Ln,m) sur les N dernières trames, il est possible d'obtenir une pénalité relative au NP dernières millisecondes de jeu. Dès lors, il est possible de fixer un seuil en dessus duquel l'estimation est jugée fiable.

En ce qui concerne le suivi de la partition musicale 10, dans une première approximation, il peut être considéré que l'interprète ne peut arriver en l'état Si qu'à partir de l'état Si-1, l'accord théorique précédent de la partition musicale 10. Autrement dit, l'interprète joue tous les accords. En pratique l'interprète a rarement cette discipline, au contraire, il peut vouloir s'entrainer et effectuer les allers retours au sein de la pièce qu'il travaille, s'arrêter puis reprendre à un autre endroit. Afin de répondre à cette attente, le procédé de l'invention permet d'effectuer des « sauts » au sein de la partition musicale 10, en brisant la continuité induite par le choix des probabilités de transition. Dans l'espace des « log-probabilités », une valeur de 0 correspond à une probabilité de 1 et une valeur de -1 correspond à une probabilité de 0 (une stricte impossibilité). Le procédé associe à certaines zones de la partition musicale 10 des « log-probabilités » inférieures à 0 ou même égales à -1. De telles valeurs, établies sur la base de l'historique de la performance de l'interprète, entravent quasi-définitivement la possibilité que l'algorithme considère la zone en question comme le point de départ d'un nouveau segment de performance, même si les trames analysées par la suite le suggère.

Afin de remédier à cela, il est possible de relever les probabilités Li,j devenues trop faibles. En pratique, cela se traduit par l'opération de seuillage réalisée selon l'équation suivante :

$$L_{i,j} = \begin{cases} L_{i,j}, si\ L_{i,j} \geq Z \\ Z, sinon \end{cases},$$

avec Z le seuil désiré. Le seuil en question doit être choisi judicieusement, il ne doit pas être trop haut, cela aurait pour effet de rendre chaque zone de la partition équiprobable en toute circonstance, ni trop bas, afin de rester effectif. Ainsi les discontinuités de jeu sont autorisées au sein du modèle et lorsque qu'une telle discontinuité se présente, le procédé ne met que quelque secondes pour converger vers la nouvelle position Px.

L'invention permet ainsi de guider efficacement un interprète selon son interprétation d'une partition numérique 10 en prenant en compte son tempo et ses changements de ligne de lecture.

## Revendications

**1.** Procédé de suivi d'une partition musicale (10) comportant les étapes suivantes :

- affichage (20) d'un élément de marquage (11) sur ladite partition musicale (10), et
- déplacement (21) dudit élément de marquage (11),

**caractérisé en ce qu'**il comporte en outre les étapes suivantes effectuées en temps réel :

- enregistrement (23) d'au moins un son (12) d'une performance fournie par un interprète sous la forme d'une trame de données (Tr) d'une durée (Di),
- estimation (24) d'au moins un vecteur chromatique (Vx) à partir d'un contenu (Ci) de ladite trame de données (Tr),
- comparaison (26) dudit vecteur chromatique (Vx) avec des vecteurs chromatiques théoriques (V1, V2, Vi, Vi-1) de ladite partition musicale (10),
- comparaison (27) d'une transition (Tx) entre ledit vecteur chromatique (Vx) et un précédent vecteur chromatique (Vx-1) avec des transitions théoriques (T1, Ti, Tl-1) de ladite partition musicale (10), et
- estimation (28) d'une position de travail (Px) de l'interprète en fonction d'une position de travail précédente (Px-1), de la comparaison (26) dudit vecteur chromatique (Vx) et de la comparaison (27) de ladite transition (Tx),
- les étapes d'affichage (20) et de déplacement (21) dudit élément de marquage (11) étant réalisées en fonction de ladite position de travail (Px) de l'interprète, et
- l'étape d'enregistrement (23) étant réalisée sur une durée (Di) adaptée en fonction du rapport entre une durée (Dx) de ladite transition (Tx) et une durée de référence (Dref).

**2.** Procédé selon la revendication 1, **caractérisé en ce qu'**il comporte une étape de normalisation (25) dudit vecteur chromatique (Vx) avec lesdits vecteurs chromatiques théoriques (V1, V2, Vi, Vi-1) de ladite partition musicale (10).

**3.** Procédé selon la revendication 1 ou 2, **caractérisé en ce que** l'étape de comparaison (26) dudit vecteur chromatique (Vx) avec des vecteurs chromatiques théoriques (V1, V2, Vi, Vi-1) de ladite partition musicale (10) comporte les sous-étapes suivantes :

- estimation de la distance euclidienne (Ei) entre ledit vecteur chromatique (Vx) et chaque vecteur chromatique théorique (V1, V2, Vi, VI-1),
- normalisation de la somme des distances euclidiennes (Ei) obtenues, et
- estimation d'une probabilité d'appartenance dudit vecteur chromatique (Vx) à chaque vecteur chromatique théorique (V1, V2, Vi, Vi-1)

**4.** Procédé selon l'une des revendications précédentes, **caractérisé en ce que** l'étape de comparaison (27) d'une transition (Tx) entre ledit vecteur chromatique (Vx) et un précédent vecteur chromatique (Vx-1) est effectuée au moyen d'une loi de Poisson.

**5.** Procédé selon l'une des revendications précédentes, **caractérisé en ce que** l'au moins une estimation est effectuée sur une échelle logarithmique.

**6.** Procédé selon l'une des revendications précédentes, **caractérisé en ce que** l'estimation de la durée (Di) de l'étape d'enregistrement (23) est effectuée au moyen d'un algorithme de décodage de Viterbi.

**7.** Procédé selon l'une des revendications précédentes, **caractérisé en ce que** l'au moins une estimation comporte un seuil en dessous duquel l'estimation est jugée non pertinente et dont le résultat ne sera pas exploité.

**Patentansprüche**

1. Verfahren zur Mitverfolgung einer Partitur (10) bestehend aus folgenden Schritten:

   - Anzeigen (20) eines Markierungselements (11) auf der Partitur (10) und
   - Verschieben (21) des Markierungselements (11),

   **dadurch gekennzeichnet, dass** es weiter folgende Schritte umfasst, die in Echtzeit ausgeführt werden:

   - Registrieren (23) von mindestens einem Ton (12) einer von einem Interpreten gelieferten Leistung in Form eines Datenrahmens (Tr) einer Dauer (Di),
   - Schätzung (24) mindestens eines Farbvektors (Vx) ausgehend von einem Inhalt (Ci) des Datenrahmens (Tr),
   - Vergleich (26) des Farbvektors (Vx) mit den theoretischen Farbvektoren (V1, V2, Vi, Vi-1) der Partitur (10),
   - Vergleich (27) eines Übergangs (Tx) zwischen dem Farbvektor (Vx) und einem vorherigen Farbvektor (Vx-1) mit den theoretischen Übergängen (T1, Ti, TI-1) der Partitur (10), und
   - Schätzung (28) einer Arbeitsposition (Px) des Interpreten entsprechend einer vorherigen Arbeitsposition (Px-1), des Vergleichs (26) des Farbvektors (Vx) und des Vergleichs (27) des Übergangs (Tx),
   - wobei die Schritte Anzeigen (20) und Verschieben (21) des Markierungselements (11) in Abhängigkeit von der Arbeitsposition (Px) des Interpreten erfolgen, und
   - der Schritt Registrieren (23) während einer Dauer (Di) erfolgt, die in Abhängigkeit vom Verhältnis zwischen einer Dauer (Dx) des Übergangs (Tx) und einer Referenzdauer (Dref) angepasst ist.

2. Verfahren nach Anspruch 1, **dadurch gekennzeichnet, dass** es einen Normalisierungsschritt (25) des Farbvektors (Vx) mit den theoretischen Farbvektoren (V1, V2, Vi, Vi-1) der Partitur (10) umfasst.

3. Verfahren nach Ansprüche 1 oder 2, **dadurch gekennzeichnet, dass** der Schritt Vergleichen (26) des Farbvektors (Vx) mit den theoretischen Farbvektoren (V1, V2, Vi, Vi-1) der Partitur (10) die folgenden Unterschritte enthält:

   - Schätzung des euklidischen Abstands (Ei) zwischen dem Farbvektor (Vx) und jedem theoretischen Farbvektor (V1, V2, Vi, VI-1)
   - Normalisierung der Summe der erhaltenen euklidischen Abstände (Ei), und
   - Schätzung einer Zugehörigkeitswahrscheinlichkeit des Farbvektors (Vx) zu jedem theoretischen Farbvektor (V1, V2, Vi, Vi-1)

4. Verfahren nach einem der vorstehenden Ansprüche, **dadurch gekennzeichnet, dass** der Schritt Vergleich (27) eines Übergangs (Tx) zwischen dem Farbvektor (Vx) und einem vorherigen Farbvektor (Vx-1) mit Hilfe einer Poisson-Verteilung erfolgt.

5. Verfahren nach einem der vorstehenden Ansprüche, **dadurch gekennzeichnet, dass** die mindestens eine Schätzung auf einer logarithmischen Skala erfolgt.

6. Verfahren nach einem der vorstehenden Ansprüche, **dadurch gekennzeichnet, dass** die Schätzung der Dauer (Di) des Schritts Registrieren (23) mit Hilfe eines Viterbi-Decodierungsalgorithmus erfolgt.

7. Verfahren nach einem der vorstehenden Ansprüche, **dadurch gekennzeichnet, dass** die mindestens eine Schätzung einen Schwellenwert umfasst, unter dem die Schätzung als nicht stichhaltig eingestuft wird und deren Ergebnis nicht genutzt wird.

**Claims**

1. Method for monitoring a musical score (10) comprising the following steps:

   - displaying (20) of a marking element (11) on said musical score (10), and
   - movement (21) of said marking element (11),

   **characterised in that** it further comprises the following steps carried out in real time:

- recording (23) of at least one sound (12) of a performance given by an interpreter in the form of a data frame (Tr) of a duration (Di),
- estimation (24) of at least one chromatic vector (Vx) from a content (Ci) of said data frame (Tr),
- comparison (26) of said chromatic vector (Vx) with theoretical chromatic vectors (V1, V2, Vi, Vi-1) of said musical score (10),
- comparison (27) of a transition (Tx) between said chromatic vector (Vx) and a preceding chromatic vector (Vx-1) with theoretical transitions (T1, Ti, TI-1) of said musical score (10), and
- estimation (28) of a work position (Px) of the interpreter according to a preceding work position (Px-1), of the comparison (26) of said chromatic vector (Vx) and of the comparison (27) of said transition (Tx),
- the steps for displaying (20) and moving (21) said marking element (11) being carried out according to said work position (Px) of the interpreter, and
- the recording step (23) being carried out over a duration (Di) adapted according to the ratio between a duration (Dx) of said transition (Tx) and a reference duration (Dref).

2. Method according to claim 1, **characterised in that** it comprises a step for standardising (25) said chromatic vector (Vx) with said theoretical chromatic vectors (V1, V2, Vi, Vi-1) of said musical score (10).

3. Method according to claim 1 or 2, **characterised in that** the step for comparing (26) said chromatic vector (Vx) with the theoretical chromatic vectors (V1, V2, Vi, Vi-1) of said musical score (10) comprises the following sub-steps:

- estimation of the Euclidean distance (Ei) between said chromatic vector (Vx) and each theoretical chromatic vector (V1, V2, Vi, VI-1),
- standardisation of the sum of the Euclidean distances (Ei) obtained, and
- estimation of a probability of belonging of said chromatic vector (Vx) to each theoretical chromatic vector (V1, V2, Vi, Vi-1).

4. Method according to one of the preceding claims, **characterised in that** the step for comparing (27) a transition (Tx) between said chromatic vector (Vx) and a preceding chromatic vector (Vx-1) is carried out by means of Poisson distribution.

5. Method according to one of the preceding claims, **characterised in that** the at least one estimation is made on a logarithmic scale.

6. Method according to one of the preceding claims, **characterised in that** the estimation of the duration (Di) of the recording step (23) is made by means of a Viterbi decoding algorithm.

7. Method according to one of the preceding claims, **characterised in that** the at least one estimation comprises a threshold below which the estimation is deemed non-relevant and of which the result will not be utilised.

Fig. 1

Fig. 2

Fig. 3